## Europäisches Patentamt

## European Patent Office

## Office européen des brevets

(19)

(11) Veröffentlichungsnummer: **0 027 282**
**B1**

(12) **EUROPÄISCHE PATENTSCHRIFT**

(45) Veröffentlichungstag der Patentschrift:
09.02.83

(51) Int. Cl.³: **B 23 B 31/26**

(21) Anmeldenummer: **80200855.7**

(22) Anmeldetag: **11.09.80**

(54) Spindelverlängerung für Werkzeugmaschinen.

(30) Priorität: **12.10.79 CH 9206/79**

(43) Veröffentlichungstag der Anmeldung:
**22.04.81 Patentblatt 81/16**

(45) Bekanntmachung des Hinweises auf die Patenterteilung:
**09.02.83 Patentblatt 83/6**

(84) Benannte Vertragsstaaten:
**AT CH DE FR GB IT LI NL SE**

(56) Entgegenhaltungen:
**DE-C-578 974**
**FR-A-1 451 525**
**FR-A-1 452 753**
**FR-A-2 288 579**
**US-A-3 177 775**
**US-A-3 762 271**
**US-A-3 797 956**
**US-A-4 122 755**
**WERKSTATT UND BETRIEB, Band 109, Heft 10, 1976, Carl Hanser Verlag München, DE. GRABHER: »Zeitgemäße Konzeption einer vertikalen Bohr- und Fräsmaschine«, Seiten 555, 556**

(73) Patentinhaber: **Werkzeugmaschinenfabrik Oerlikon-Bührle AG, Birchstrasse 155, CH-8050 Zürich (CH)**

(72) Erfinder: **Trumpf, Jakob, Weiherstrasse 74, CH-8107 Buchs (CH)**
Erfinder: **Keller, Hansueli, Riethof 12, CH-8604 Hegnau (CH)**

## Spindelverlängerung für Werkzeugmaschinen

Die Erfindung betrifft eine Spindelverlängerung für Werkzeugmaschinen, welche eine Spindel mit einer automatischen Werkzeugspannvorrichtung aufweisen, wobei die automatische Werkzeugspannvorrichtung eine Spannzange aufweist, mit einem Spindelverlängerungsstück, das in einen Innenkonus der Spindel einsetzbar ist und einen Innenkonus zur Aufnahme eines Werkzeugkonus aufweist.

Es sind Spindelverlängerungen für Bohr- und Fräsmaschinen bekannt, bei denen das Werkzeug durch Schrauben gehalten wird und nicht mehr durch die automatische Werkzeugspannvorrichtung gehalten werden kann, oder bei denen ein verlängerter Spannzapfen am Werkzeug befestigt werden muß, damit die automatische Spannvorrichtung verwendet werden kann.

Die Aufgabe, welche mit der vorliegenden Erfindung gelöst werden soll, besteht in der Schaffung einer Spindelverlängerung, bei der sich die üblichen Werkzeuge verwenden lassen und bei der ein automatisches Spannen der Werkzeuge gewährleistet ist.

Die erfindungsgemäße Spindelverlängerung ist dadurch gekennzeichnet, daß das Verlängerungsstück eine Spannzange aufweist zum Erfassen des Spannzapfens eines Werkzeugkonus, und daß diese Spannzange mit einem Spannzapfen versehen ist, der von der Spannzange der Spindel erfaßbar ist.

Zwei Ausführungsbeispiele der erfindungsgemäßen Spindelverlängerung sind im folgenden anhand der beigefügten Zeichnung ausführlich beschrieben.

In der einzigen Figur ist ein Längsschnitt durch die beiden Ausführungsbeispiele der Spindelverlängerung gezeigt.

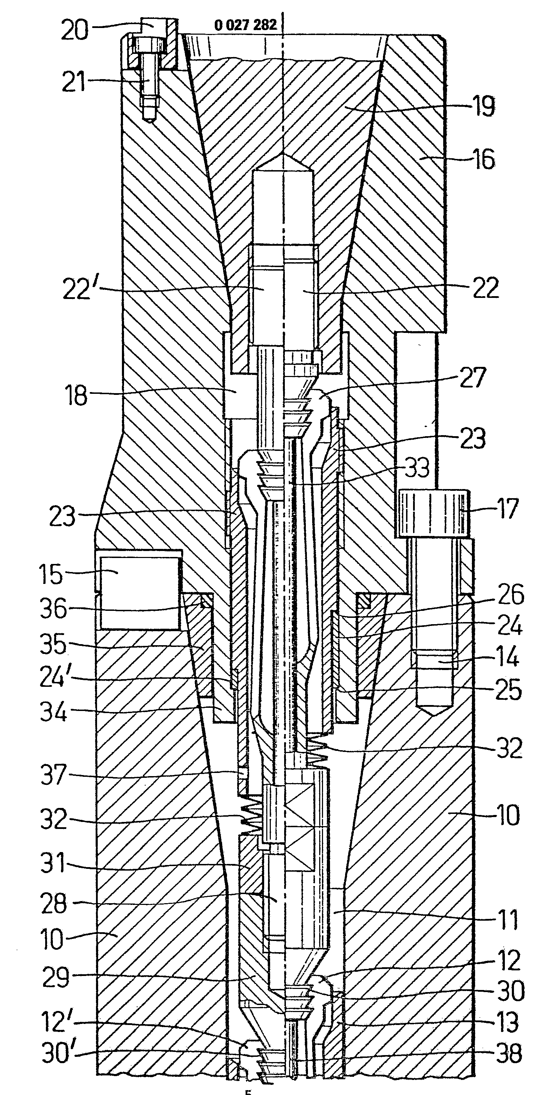

Die nicht dargestellte Horizontalbohr- und Fräsmaschine weist eine Spindel 10 auf, die in üblicher Weise in einem ebenfalls nicht dargestellten Spindelstock gelagert ist. Die Spindel 10 ist hohl, d. h. sie weist eine Längsbohrung 11 auf. In dieser Bohrung 11 der Spindel 10 befindet sich eine Spannzange 12, die zum Spannen der Werkzeuge dient. Eine nicht dargestellte Spannvorrichtung mit Hydraulikzylinder und Spannfeder ermöglicht es, die Spannzange 12 in der Bohrung zu verschieben. In der Zeichnung ist die Spannzange 12 in ihrer hintersten Stellung gezeigt, dies gilt für beide Hälften der Fig. 1, denn in der rechten Hälfte der Figur ist ein erstes Ausführungsbeispiel mit einer etwas längeren Spannzange 12 und in der linken Hälfte der Figur ist ein zweites Ausführungsbeispiel mit einer etwas kürzeren Spannzange 12' gezeigt. Die Spannzange 12 besteht aus einer Anzahl von Segmenten, von denen in der Figur nur ein einziges Segment sichtbar ist. In der gezeigten Stellung befindet sich die Spannzange 12 in einer Hülse 13, welche eine konische Bohrung aufweist, wodurch die Segmente der Spannzange 12 radial nach innen gedrückt werden, wenn die Spannzange 12 durch die erwähnte Spannfeder in die gezeigte hinterste Stellung bewegt wird. Wird die Spannzange 12 mit Hilfe des erwähnten Hydraulikzylinders nach vorne, d. h. in der Zeichnung nach oben, bewegt, dann tritt sie aus der konischen Bohrung der Hülse 13 heraus und die Segmente der Spannzange 12 können sich radial nach außen bewegen und das Werkzeug freigeben.

Dieses Spannen und Freigeben des Werkzeuges mit Hilfe der Spannzange 12 gehört zum Stand der Technik und muß daher hier nicht näher erläutert werden, da vorausgesetzt wird, daß dies dem Fachmann bekannt ist. Die Spindel 10 weist an ihrem vorderen, d. h. in der Figur an ihrem oberen Ende, eine Anzahl Gewindebohrungen 14 und Nutensteine 15 auf. Vorzugsweise sind vier Gewindebohrungen und zwei Nutensteine gleichmäßig am Umfang verteilt vorgesehen. In der Zeichnung ist jedoch nur eine Gewindebohrung 14 und ein Nutenstein 15 sichtbar. Die Gewindebohrungen 14 ermöglichen die Befestigung von schweren Werkzeugen und die Nutensteine 15 sichern alle Werkzeuge gegen eine unbeabsichtigte Verdrehung.

Erfindungsgemäß ist an der Spindel 10 ein Spindelverlängerungsstück 16 mit Hilfe von Schrauben 17 befestigt, wobei die Schrauben 17 in die erwähnten Gewindebohrungen 14 eingeschraubt sind, welche an jeder Spindel 10 vorgesehen sind. Durch die Nutensteine 15 ist das Spindelverlängerungsstück 16 gegen unbeabsichtigte Verdrehung gesichert.

Genau wie die Spindel 10 weist auch das Spindelverlängerungsstück 16 eine Längsbohrung 18 auf, die sich nach oben konisch erweitert. Diese konische Erweiterung der Längsbohrung 18 dient zur Aufnahme eines Werkzeuges, von dem in der Zeichnung nur ein Werkzeugkonus 19 sichtbar ist. An diesem Werkzeugkonus 19 ist in an sich bekannter und daher hier nicht näher dargestellter Weise ein Werkzeug, z. B. ein Bohrer, befestigt. Am oberen Ende des Spindelverlängerungsstückes 16 sind ebenfalls Nutensteine 20 mit Hilfe von Schrauben 21 befestigt. In der Zeichnung ist wiederum nur ein einziger Nutenstein 20 sichtbar. Die Nutensteine 20 dienen genau wie die Nutensteine 15 zur Sicherung des Werkzeugkonus gegen eine unbeabsichtigte Verdrehung. In eine Längsbohrung des Werkzeugkonus 19 ist ein Spannzapfen 22 eingeschraubt. In der rechten Hälfte der Zeichnung ist ein kürzerer Spannzapfen 22 gemäß einem ersten Ausführungsbeispiel und in der linken Hälfte der Fig. 1 ist ein längerer Spannzapfen 22' gemäß einem zweiten Ausführungsbeispiel dargestellt.

Im zylindrischen Teil der Längsbohrung 18 des Spindelverlängerungsstückes 16 ist eine Büchse 23 eingeschraubt, welche eine konische Bohrung aufweist, genau wie die weiter oben erwähnte Hülse 13. Diese Büchse 23 ist in der rechten Hälfte der Fig. 1 gemäß dem ersten Ausführungsbeispiel weniger tief in das Spindelverlängerungsstück 16 eingeschraubt als in der linken Hälfte der Fig. 1. Um dies zu erreichen, ist für das erste Ausführungsbeispiel eine längere Distanzhülse 24 vorgesehen als für das zweite Ausführungsbeispiel, bei dem diese Distanzhülse 24′ wesentlich kürzer ist. Diese Distanzhülse 24 liegt einerseits an einer Schulter 25 des Spindelverlängerungsstückes 16 und andererseits an einer Schulter 26 der Büchse 23 an. Wie aus der Zeichnung ohne weiteres erkennbar ist, sind mit Ausnahme dieser Distanzhülse 24′ alle Teile der Spindelverlängerung bei beiden Ausführungsbeispielen genau gleich. Dies gilt insbesondere für die oben beschriebene Büchse 23. In dieser Büchse 23 befindet sich eine Spannzange 27. Die Spannzange 27 weist an ihrem oberen Ende eine Anzahl Segmente auf, die genau gleich ausgebildet sind wie die Segmente der Spannzange 12. Die Segmente der Spannzange 27 sind aus einem Stück mit einem Gewindebolzen 28 am unteren Ende der Spannzange. An diesem Gewindebolzen 28 ist eine Mutter 29 festgeschraubt, die an ihrem unteren Ende einen Spannzapfen 30 aufweist. Dieser Spannzapfen 30 steht in Eingriff mit der weiter oben beschriebenen Spannzange 12. Eine Kontermutter 31, welche ebenfalls auf den Gewindebolzen 28 aufgeschraubt ist, dient zum Sichern der Mutter 29 auf dem Gewindebolzen 28. Zwischen der Kontermutter 31 und der in das Spindelverlängerungsstück 16 eingeschraubten Büchse 23 ist ein Federpaket angeordnet, welches das Bestreben hat, die Spannzange 27 in die konische Bohrung hineinzuziehen, bis die Spannzange an der Wand dieser konischen Bohrung anliegt.

Zwischen den Segmenten der Spannzange 27 ist ein Ausstoßrohr 33 angeordnet, das mit seinem unteren Ende im Gewindebolzen 28 der Spannzange 27 verankert ist. Wird die Spannzange nach vorne, d. h. in der Zeichnung nach oben, bewegt, dann stößt dieses Austoßrohr 33 gegen den Spannzapfen 22, wodurch der Werkzeugkonus 19 mit dem Werkzeug aus dem Spindelverlängerungsstück 16 herausgestoßen wird. Ein solches Austoßrohr 38 ist auch an der Spannzange 12 vorgesehen, mit welchem der Spannzapfen 30 nach oben gestoßen werden kann.

Am hinteren Ende des Spindelverlängerungsstückes 16 ist ein zylindrischer Ansatz 34 vorhanden, auf dem eine außenkonische Hülse 35 nicht drehbar und in begrenzter Weise axial verschiebbar gelagert ist. Diese Hülse 35 gewährleistet eine genaue Zentrierung des Spindelverlängerungsstückes in der konischen Bohrung der Spindel 10 und außerdem ein genaues Anliegen des Spindelverlängerungsstückes 16 an der Stirnfläche der Spindel 10. Dies wird insbesondere durch einen elastischen Dichtungsring 36 erreicht. Damit der Werkzeugkonus exakt an dem konischen Teil der Bohrung 18 des Spindelverlängerungsstückes 16 anliegt, wird die Fläche mit Druckluft gereinigt. Damit die Druckluft aus der Spindel-Längsbohrung 11 in die Längsbohrung 18 des Spindelverlängerungsstückes 16 gelangen kann, weist die Hülse 23 mindestens eine Bohrung 37 an ihrem hinteren Ende auf.

Die Wirkungsweise der beschriebenen Spindelverlängerung ist wie folgt:

Falls für große Werkstücke, z. B. mit langen Bohrungen, die Spindelverlängerung erforderlich ist, wird das Spindelverlängerungsstück 16 mit Hilfe der vier Schrauben 17 und der Gewindebohrungen 14 auf die Spindel 10 aufgeschraubt. Die außenkonische Hülse 35 wird dabei mit Hilfe des Dichtungsringes 36 federnd in den Innenkonus der Spindel 10 gedrückt. Unter der Kraft des Tellerfederpaketes 32 wird die Spannzange 27 in ihrer hintersten Stellung, d. h. in Fig. 1 in ihrer untersten Stellung, gehalten. Dadurch ist gewährleistet, daß die Spannzange 12 der Spindel 10 den Spannzapfen 30 zuverlässig erfassen kann.

Zum Festspannen des Werkzeugkonus' 19 wird die Spannzange 12 mit dem Ausstoßrohr 38 nach oben bewegt, wodurch sich die Spannzange 12 öffnet und der Spannzapfen 30 durch das Ausstoßrohr 38 nach oben gestoßen wird. Mit dem Spannzapfen 30 wird auch die Spannzange 37 der Spindelverlängerung nach oben gestoßen und geöffnet. In die geöffnete Spannzange 27 kann nun der Spannzapfen 22 des Werkzeugkonus' eingeschoben werden. Anschließend wird durch die nicht dargestellte Spannfeder die Spannzange 12 in ihre Ausgangslage zurückbewegt, wodurch sie unter der Wirkung der Hülse 13 geschlossen wird, sie gelangt dabei in Eingriff mit dem Spannzapfen 30, der ebenfalls zurückgezogen wird. Somit wird auch die Spannzange 27 zurückgezogen und unter der Wirkung der Büchse 23 geschlossen. Dadurch gelangt die Spannzange 27 in Eingriff mit dem Spannzapfen 22 des Werkstückkonus, der in den Innenkonus des Spindelverlängerungsstückes 16 hineingezogen und festgespannt wird.

Das Ausstoßen erfolgt in umgekehrter Reihenfolge.

**Patentansprüche**

1. Spindelverlängerung für Werkzeugmaschinen, welche eine Spindel (10) mit einer automatischen Werkzeugspannvorrichtung aufweisen, wobei die automatische Werkzeugspannvorrichtung eine Spannzange (12) aufweist, mit einem Spindelverlängerungsstück (16), das in einen Innenkonus der Spindel (10) einsetzbar ist und einen Innenkonus zur Aufnahme eines Werkzeugkonus (19) aufweist, dadurch gekennzeichnet, daß das Spindelverlängerungsstück (16) eine Spannzange (27) aufweist zum Erfassen des Spannzapfens (22) eines Werkzeugkonus (19), und daß diese Spannzange (27) mit einem Spannzapfen (30) versehen ist, der von der Spannzange (12) der Spindel (10) erfaßbar ist.

2. Spindelverlängerung nach Anspruch 1, dadurch gekennzeichnet, daß die Spannzange (27) mit dem Spannzapfen (30) verschiebbar im Spindelverlängerungsstück (16) angeordnet ist, und daß eine Feder (32), welche sich einerseits an einer im Spindelverlängerungsstück (16) befestigten Büchse (23) und andererseits über eine Mutter (29) am Spannzapfen (30) abstützt, das Bestreben hat, die Spannzange (27) in ihrer hinteren Stellung zu halten.

3. Spindelverlängerung nach Anspruch 2, dadurch gekennzeichnet, daß das Spindelverlängerungsstück (16) an seinem hinteren Ende einen zylindrischen Ansatz (34) aufweist, auf dem eine außenkonische Hülse (35) nicht verdrehbar und in begrenzter Weise axial verschiebbar angeordnet ist, welche das Spindelverlängerungsstück (16) im Innenkonus der Spindel (10) zentriert.

## Claims

1. A spindle extension for machine tools comprising a spindle (10) with an automatic tool chucking device, said automatic tool chucking device having a clamping chuck (12); with a spindle elongation element (16) which can be inserted in an internal conical portion of said spindle (10), said spindle elongation element (16) having an internal conical portion for receiving a tool cone (19) characterised in that the spindle elongation element (16) having a clamping chuck (27) for engaging a clamping pin (22) of a tool cone (19) and that clamping chuck (27) is provided with a clamping pin (30) which is engageable by the clamping chuck (12) of the spindle (10).

2. The spindle extension as defined in claim 1, wherein said clamping chuck (27) together with said clamping pin (30) is arranged to be displaceable within spindle elongation element (16) and wherein a spring element (32) bearing at one end at a bushing (23) secured within the spindle elongation (16) and at the other end at a nut member (29) engaged by the clamping chuck (27), said spring element (32) striving to retain said clamping chuck (27) in a rearward position.

3. The spindle extension as defined in claim 2, wherein said spindle elongation element (16) has a rear end which is provided with a substantially cylindrical extension (34), an externally substantially conically configured sleeve (35) non-rotatably mounted upon said cylindrical extension (34) and arranged to be axially displaceable thereon to a limited degree, said conically configured sleeve (35) serving to center said spindle elongation element (16) within the internal conical portion of said spindler (10).

## Revendications

1. Rallonge de broche pour machines outils, comportant une broche (10) avec un dispositif automatique de serrage d'outil, ce dispositif automatique de serrage d'outil comportant une pince de serrage (12), avec une pièce (16) de prolongement de broche, qui est susceptible d'être introduite dans un cône interne de la broche (10) et qui comporte un cône interne pour recevoir le cône (19) d'un outil, rallonge de broche caractérisée en ce que la pièce (16) de prolongement de broche comporte une pince de serrage (27) pour saisir l'embout de serrage (22) du cône (19) d'un outil, cette pince de serrage (27) étant munie d'un embout de serrage (30) susceptible d'être saisi par la pince de serrage (12) de la broche (10).

2. Rallonge de broche selon la revendication 1, caractérisée en ce que la pince de serrage (27) avec l'embout de serrage (30) est disposée en étant susceptible de coulisser dans la pièce (16) de prolongement de la broche, tandis qu'un ressort (32), qui prend appui, d'une part, contre un manchon (23) fixé dans la pièce (16) de prolongement de broche, et d'autre part, par l'intermédiaire d'un écrou (29) sur l'embout de serrage (30), tend à maintenir dans sa position arrière la pince de serrage (27).

3. Rallonge de broche selon la revendication 2, caractérisée en ce que la pièce (16) de prolongement de broche comporte à son extrémité arrière, un appendice cylindrique (34) sur lequel est disposée, sans pouvoir tourner, et susceptible dans une mesure limitée de coulisser axialement, une douille (35) conique extérieurement, qui centre la pièce (16) de prolongement de broche dans le cône interne de la broche (10).

0 027 282